(19) Europäisches Patentamt

European Patent Office

Office européen des brevets

(11) **EP 4 000 710 A1**

(12) **EUROPEAN PATENT APPLICATION**

(43) Date of publication:
**25.05.2022 Bulletin 2022/21**

(21) Application number: **20208880.3**

(22) Date of filing: **20.11.2020**

(51) International Patent Classification (IPC):
**B01D 39/06** $^{(2006.01)}$ **B01D 39/20** $^{(2006.01)}$

(52) Cooperative Patent Classification (CPC):
**B01D 39/2044; B01D 39/06;** B01D 2239/0627;
B01D 2239/10; B01D 2239/12; B01D 2239/1233;
B01D 2239/1291

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Max-Planck-Gesellschaft zur
Förderung der
Wissenschaften e.V.
80539 München (DE)**

(72) Inventors:
• **JAHNKE, Timotheus
70597 Stuttgart (DE)**
• **HACKNER, Maximilian
73066 Sparwiesen (DE)**
• **SPATZ, Joachim P.
70569 Stuttgart (DE)**

(74) Representative: **Manitz Finsterwald
Patent- und Rechtsanwaltspartnerschaft mbB
Martin-Greif-Strasse 1
80336 München (DE)**

(54) **FILTER**

(57) A filter comprising a plurality of metal fibers having a non-round cross section, in particular a rectangular, quadric, partial circular or an elliptical cross section with a large axis and a small axis, wherein a ratio of the small axis to the large axis lies in the range of 1 to 0.05, preferably in the range of 0.7 to 0.1, in particular in the range of 0.5 to 0.1. The invention further relates to a treatment method for metal fibers comprising an elliptical or rectangular cross section, both having a large axis and a small axis, wherein a ratio of a length of the small axis to a length of the large axis is smaller than 1, preferably smaller than 0.5, wherein the treatment method comprises the step of heating the fibers in an oven to a temperature between 70 and 95% of the melting temperature, such that the ratio of the length of the small axis to the length of the large axis increases, preferably up to 1.

**EP 4 000 710 A1**

**Description**

The invention relates to a filter comprising a plurality of metal fibers and a treatment method for metal fibers.

Conventionally, filtration of gases such as air or liquids is based on metal fiber meshes or foams. Such meshes or foams are nowadays part of a great variety of gadgets, ranging from oil filters in automotive applications to cleaning systems for fluids or gases such as air.

These, conventionally known filters are usually based on metal fibers comprising a circular cross section (e. g. oil filters) or on carbon-based foams (e. g. HEPA filters). Filters made out of metal fibers with circular cross sections are characterized in that such fibers comprise a high mechanical stability while comprising small surface to volume ratios. However, such filters usually comprise a rather high weight since a great amount of fibers is needed. Filters made out of carbon foams, on the other hand, are mostly rather fragile while being light weighted and having a rather large inner surface area.

Hence, so far there are no filters available, which comprise a high mechanical stability while still being light weighted.

It is therefore an object of the invention to provide a filter, with which the above mentioned drawbacks can be overcome. This object is solved by the subject matter of the independent claims.

According to a first aspect of the invention a filter comprising a plurality of metal fibers having a non-round cross section, in particular a rectangular, quadratic, partial circular or an elliptical cross section with a large axis and a small axis is provided, wherein a ratio of the small axis to the large axis lies in the range of 1 to 0.05, preferably in the range of 0.7 to 0.1, in particular in the range of 0.5 to 0.1.

As it is generally known, the ratio between the lengths of the small and the large axis of an ellipse is higher the more the ellipse looks like a circle, for which the ratio would be 1. The smaller the value of the ratio is, the flatter is the ellipse. Thus, the ratio of the small axis to the large axis is in particular less than 1.

In this connection it is noted that, obviously, the value of the small axis must be smaller than the value of the large axis. In the case in which the small axis comprises a higher value, i. e. a greater length, than the large axis, the definition of "small" and "large" must simply be interchanged.

The invention relies on the fact that fibers with non-circular cross sections such as rectangular, quadratic, partial circular or elliptical cross sections (elliptical fibers) comprise a higher surface to volume ratio than fibers with a circular cross section (round fibers). Consequently, filters made out of fibers having a non-circular cross section comprise a lower weight compared to filters made out of round fibers since fewer fibers are needed for a filter of a given size.

The lower weight of such a filter being made out of e.g. elliptical fibers may have a slightly lower mechanical stability than the stability of a filter made out of round fibers. Mechanical stability in this context means that the filter does not disintegrate into isolated metal fibers when subjected to a mechanical load, e.g. when a fluid passes through the filter. Accordingly, such a filter can, for example, be flexibly deformed without breaking. Nevertheless, the filter according to the invention comprises a much higher mechanical stability than, for example, conventionally known light weight filters made out of carbon foams.

It may in fact be possible to choose the characteristics of the filter according to the application of the filter by using fibers with a higher or lower ratio between the lengths of the small and large axis as described above. Hence, by using fibers with a lower ratio, the mechanical stability as well as the weight of the filter decreases, whereas by using fibers with a higher ratio, the mechanical stability as well as the weight of the filter increases. It may be chosen according to the application which characteristic is more important.

Another advantage of the filter according to the invention is that the filter is flexible and can be deformed repeatedly without causing degradation of the filter, i. e. without separating single metal fibers out of the plurality of metal fibers due to deformation. The metal fibers can be fixed to one another so that the metal fibers contact each other such that the point of contact is not movable relative to the metal fibers. On the other hand it can also be possible that the plurality of fibers is a loose collection of fibers, i. e. the fibers are not connected to one another.

According to an embodiment of the invention the fibers comprise a length of 1.0 mm or more.

According to a further embodiment a length of the large axis is 100 $\mu$m or less, preferably 50 $\mu$m or less, in particular 20 $\mu$m or less, and the a length of the small axis is 50 $\mu$m or less, preferably 20 $\mu$m or less, in particular 10 $\mu$m or less.

With the metal fibers having a length of 1.0 mm or more and/or a length of the large axis equal to or smaller than 100 $\mu$m and a length of the small axis of 50 $\mu$m or less, it is possible to produce a filter with metal fibers that are fixed to one another without needing to heat the metals fibers to temperatures close to their melting point. Traditionally, high temperatures are required for the manufacturing of a filter of metal fibers such that the material of the fibers melts or at least softens to a certain degree so that the fibers can merge. This is not necessary for the filter according to the invention in which the fibers rather form a network with voids being resent between the fibers. Alternatively, with such fibers it is also possible to produce a filter where the distinct fibers are not specifically connected to one another but rather form a loose network out of entangled fibers. The loose network of metal fibers may be stabilized by a holding means, e.g. in the form of a frame or the like.

According to an embodiment the fibers form an ordered or an unordered network. Such an unordered network has, for example, a good electrical conductivity in every direction and anisotropic fluidic properties. Moreover, it is easier to produce an unordered network of metal fibers, compared to an order network of fibers. Nevertheless, in some applications it may be preferred that the fibers in the network are combed in different directions to provide directionality of individual fibers. Accordingly, it may be preferred that in the network some or all of the fibers have an orientation, i.e. the lengths of the fibers are not oriented randomly but have a predominant orientation in one or more spatial direction. By having a predominant orientation of the metal fibers, the filter can have isotropic fluidic properties.

The filter may also comprise an average mean pore size selected in the range of 0.1 to 100 $\mu$m, preferably in the range of 0.5 to 50 $\mu$m, in particular in the range of 1 to 10 $\mu$m. The mean pore size can be determined using a micro-computertomograph to reproduce the fiber structure and then evaluate the mean pore diameter using the bubble point method. The bubble point method determines the largest ball diameter, which might fit between two fibers, which is considered the pore size. More in detail, a point is placed at the center between two fibers and the radius of the bubble, with the point as a center is increased, until contact to the surface of both fibers is made. The diameter of the bubble corresponds to the pore size. If at any given parameter the bubble diameter only makes contact with one fiber, the center point is displaced into the direction of the fiber with which the bubble did not make contact.

According to another embodiment the filter comprises a fiber volume fraction in the range of 0.5 and 50 vol%, preferably in the range of 1 to 25 vol%. Said volume fraction may be measured by preparing a cross-section polish of the filter and analyzing it with, for example, a camera or a microscope. Then, a ratio of the fiber areas to the gap area between said fibers, i.e. a void portion between the metal fibers, may be calculated to obtain the above fiber volume fraction. The volume fraction is determined using a micro-computertomograph to reproduce the fiber structure and then evaluate the volume fraction.

According to an embodiment the thickness of the filter is in a range of 0.1 to 100 mm, in particular 0.5 to 80 mm, preferably 1 to 20 mm. The thickness of a filter according to the invention is not particularly limited. However, it may be preferred if the filter has a thickness of 0.5 mm or more. If the thickness of the filter is less than 0.1 mm, in particular less than 0.5, there is a risk that the mechanical stability and/or the performance of the filter is not sufficient. The upper limit for the thickness of the filter is not particularly limited. However, depending on the application, the upper limit may be 100 mm.

According to an embodiment the fibers are held by a frame. Alternatively, the fibers may also be sintered to one another. It can be chosen according the application of the filter which embodiment may be advantageous. In some cases it may be better to use a filter which comprises rather loose fibers, which are held together e.g. by a frame while in other embodiments it may be better to have the fibers sintered to one another such that no frame is necessary in order to hold the plurality of fibers together.

The metal fibers are made of metal or contain at least a metal. In the invention it is not particularly limited which metal is contained in the metal fibers or from which metal the metal fibers are made of. Nevertheless, it is preferred that the metal fibers of the plurality of metal fibers in the filter contain one of the elements selected from the group consisting of copper, silver, gold, nickel, palladium, platinum, cobalt, iron, chromium, vanadium, titanium, aluminum, silicon, lithium, manganese, boron, combinations of the foregoing and alloys containing one or more of the foregoing. It is further preferred that the metal fibers of the plurality of metal fibers in the network contain one of the elements selected from the group consisting of copper, silver, gold, nickel, palladium, platinum, iron, vanadium, aluminum, silicon, lithium, manganese, boron, combinations of the foregoing and alloys containing one or more of the foregoing.

It may be possible that the fibers are composed of an alloy such as CuSn8, CuSi4, AlSi1, Ni, stainless steel, Cu, Al or vitrovac alloys. Vitrovac alloys are Fe-based and Co-based amorphous alloys. It may particularly be preferred if the metal fibers are made of copper or of aluminum or of a stainless steel alloy. Different types of metal fibers can be combined with each other, so that the filter can contain for example metal fibers made of copper, one or more stainless steel alloys and/or aluminum. Filters being made out of metal fibers, wherein the metal fibers are of copper, aluminum, cobalt, stainless steel alloys containing copper, aluminum, silicon and/or cobalt are particularly preferred.

At least some of the metal fibers of the plurality of metal fibers may be sintered or processed by a thermal treatment. With the above processes the cross sections of the processed/treated fibers can be tailored with respect to the application. Hence, as already mentioned above, fibers with an elected ratio between the lengths of the small and large axis may be produced.

The fibers may also be obtainable by a melt spinning process. Such metal fibers produced by melt spinning can contain spatially confined domains in a high-energy state, due to the fast cooling applied during the melt spinning process. Fast cooling in this regard refers to a cooling rate of 102 K·min$^{-1}$ or higher, preferably of 104 K·min$^{-1}$ or higher, more preferably to a cooling rate of 105 K·min$^{-1}$ or higher. Therefore, it may even be possible to connect such metal fibers, e. g. via sintering, while keeping the temperature well below the melting temperature of the metal fibers.

Also, fibers obtained by melt spinning usually comprise a rectangular or semi-elliptical cross section, which can be transformed into an elliptical cross section rather easily. Examples for melt spinners with which such fibers can be produced are for example known from the not yet published international application PCT/EP2020/063026 and from published applications WO2016/020493 A1 and WO2017/042155 A1.

According to a second aspect, the invention relates to a treatment method for metal fibers comprising an elliptical or rectangular cross section, both having a large axis and a small axis, wherein a ratio of a length of the small axis to a length of the large axis is smaller than 1, preferably smaller than 0.5, wherein the treatment method comprises the step of heating the fibers in an oven to a temperature between 70 and 95% of the melting temperature, such that the ratio of the length of the small axis to the length of the large axis increases, preferably to 1. In this connection it is noted that for a rectangular cross section the large axis corresponds to the length of the rectangle while the small axis corresponds to its width. A lower limit of the ratio between the lengths of the small and the large axis does in theory not exist. In real life applications it may be around 0.1.

In the context of the description of the invention "% of the melting temperature" refers to the melting point in °C. Accordingly, if the melting temperature is e.g. 1000 °C, in the context of the description of the invention 20% of the melting temperature is 200 °C, 50% of the melting temperature is 500 °C and 95% of the melting temperature is 950 °C. The melting temperature may be determined e.g. by DSC measurement.

By means of a thermal treatment below the melting temperature of the fibers, flat fibers of any size can be rounded. The driving force for this is the reduction of the surface and the associated reduction in the free energy $\Delta G$. The free energy $\Delta G$ can be divided into a surface component $\Delta G_S$, a volume component $\Delta G_V$ and a grain boundary component $\Delta G_B$. The relationship is described in equation (1). During the rounding of the fibers, the volume fraction remains almost constant ($\Delta G_V = 0$), while the grain boundary fraction increases due to the transformation ($\Delta G_B > 0$) and the surface fraction decreases ($\Delta G_S < 0$). The surface part $\Delta G_S$ clearly outweighs the grain boundary part $\Delta G_B$, which leads to a negative change in the total free energy of the system ($\Delta G < 0$) and the process takes place voluntarily as soon as a certain energy threshold (activation energy) is exceeded.

$$\Delta G_T = \Delta G_V + \Delta G_B + \Delta G_S \qquad\qquad (1)$$

The energy threshold to be exceeded here is the activation energy $E_A$ of the diffusion (equation (2)). Here $D_0$ is the temperature-dependent diffusion constant, k the Boltzmann constant, T the absolute temperature and D the temperature-dependent diffusion constant. The greater the temperature-dependent diffusion constant D (in $m^2\ s^{-1}$), the faster the rounding of the fibers takes place. The temperature is not only responsible for fulfilling the activation energy $E_A$, but also the speed-determining factor.

$$D(T) = D_0 e^{-\frac{E_A}{kT}} \qquad\qquad (2)$$

The rounding thus takes place through a rearrangement process at the atomic level (diffusion) and not through a process with renewed melting of the fibers. The thermodynamic goal is to achieve the largest possible volume with the smallest possible surface. The perfect ratio here is achieved with a perfect ball.

It can be understood from the above that the higher the temperature to which the fibers are heated is chosen, the faster the rounding process takes place. For avoiding a fixation of the metal fibers to one another, it is important that all fibers lie as loosely as possible in order to avoid sticking (sintering) of the fibers. However, if the fibers should be fixed to one another, points of contact between the fibers should be present.

With the method according to the invention, it can be feasible that one can generally fabricate fibers of different shapes by choosing the temperature and/or the treatment time accordingly.

The metal fibers may be at least a part of a filter according to one of the preceding claims. Thus, by applying the treatment method according to the invention metal fibers may be tailored according to the application.

Inside the oven a protective atmosphere, in particular comprising Argon, may be applied to the fibers. Other possible inert gases for providing a protective atmosphere are Helium or Nitrogen. All of the above mentioned gases help to avoid oxidation of the fibers inside the oven.

The invention will now be described in further detail and by way of example only with reference to the accompanying drawings and pictures as well as by various examples of the network and method of the invention. In the drawings there are shown:

Fig. 1: a cross section of a schematic fiber with its small and large axis;
Fig. 2: different cross sections of schematic fibers corresponding to different ratios;
Fig. 3: a schematic illustration showing the difference of a gas flow around a round fiber and an elliptical fiber;
Fig. 4a and 4b: elliptical fiber networks with different aspect ratios;

Fig. 4c and 4d: round fiber networks with different fiber dimensions;

Fig: 5a to 5d: simulations of elliptical fiber networks with different aspect ratios and their corresponding porosities;

Fig. 6: pictures of fibers before and after a thermal treatment;

Fig. 7: pictures of the cross sections of the fibers of Fig. 6;

Fig. 8: fiber dimensions of treated and untreated fibers;

Fig. 9: fiber cross sections of treated and untreated fibers;

Fig. 10: pictures of $CuSi_4$ fibers before and after a thermal treatment; and

Fig. 11: pictures of $AlSi_1$ fibers before and after a thermal treatment.

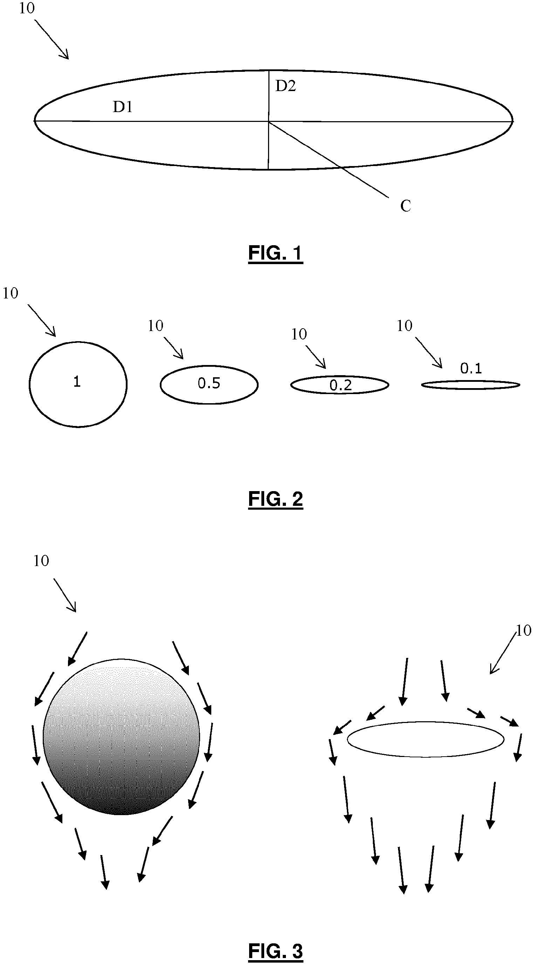

Fig. 1 shows an ellipsoid cross section of a fiber 10 with its large and small axis D1, D2. As it is commonly known, the large and small axis D1, D2 of an ellipse intersect at a center point C of the ellipse, such that they represent the "longest" and "widest" part of the ellipse, respectively. Depending on how big the difference between the lengths of said two axes D1 and D2 is, the more or less the ellipse looks like a circle or can be almost flat. Said difference is represented by the ratio of the length of D2 to the length of D1, which lies between 1 for a perfect circle and 0 for a parabola. Thus, for a circular cross section, the length of both axes D1 and D2 is equal, i.e. a ratio of D2 to D1 is equal to 1.

Different cross sections of fibers 10 with different ratios are depicted in Fig. 2. As one can see, the smaller the value of said ratio is, the flatter (and longer) is the ellipse.

The filters according to the invention comprise a plurality of such metal fibers 10 with an elliptical cross section with a large axis D1 and a small axis D2. How big the ratio between D1 and D2 is, can be chosen according to the application. Fibers 10 with rounder cross sections (ratio near 1) comprise a higher mechanical stability than fibers 10 with more elliptical cross sections (ratio well below 1). On the other hand, filters made out of elliptical fibers 10 comprise a lower weight compared to filters made out of round fibers 10 since fewer fibers 10 are needed for a filter of the same size. Hence, it may be chosen according to the application which characteristic is more important.

Furthermore, the schematic flow behavior of a gas or liquid differs with respect to the geometries of the fibers. Comparing Figs. 3a and 3b it can be seen that the flow around a round fiber 10 comprises a rather small region of lower pressure right behind (i. e. below in Fig. 3a) the fiber 10 while in Fig. 3b a larger region of lower pressure appears behind (below) the fiber 10. This effect can also be observed at air plane wings. Along this line the filtration efficiency of the filter made out of highly elliptical fibers 10 is strongly enhanced, whilst - as mentioned above - the volume fraction of the fiber 10 is simultaneously reduced.

In order to hold said plurality of fibers 10 together, they can either be sintered to one another or be held together by a frame (not shown). Such filters can comprise a thickness between 1 to 100 mm. The precise value can be chosen according to the application of the filter.

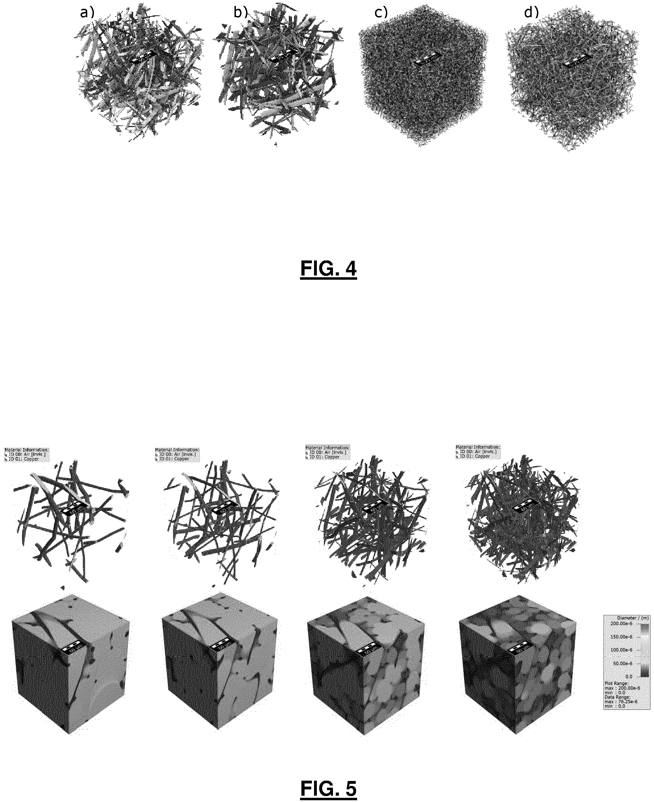

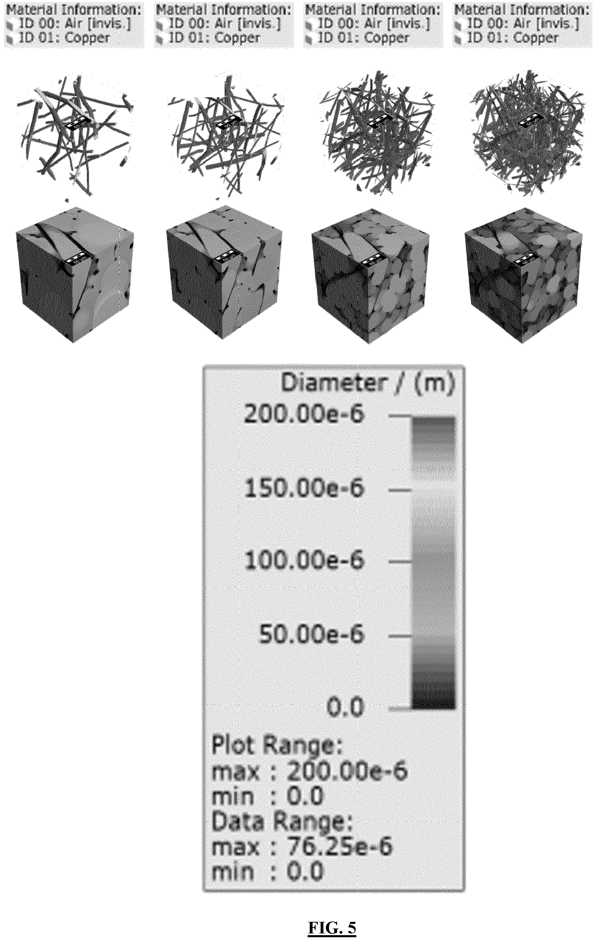

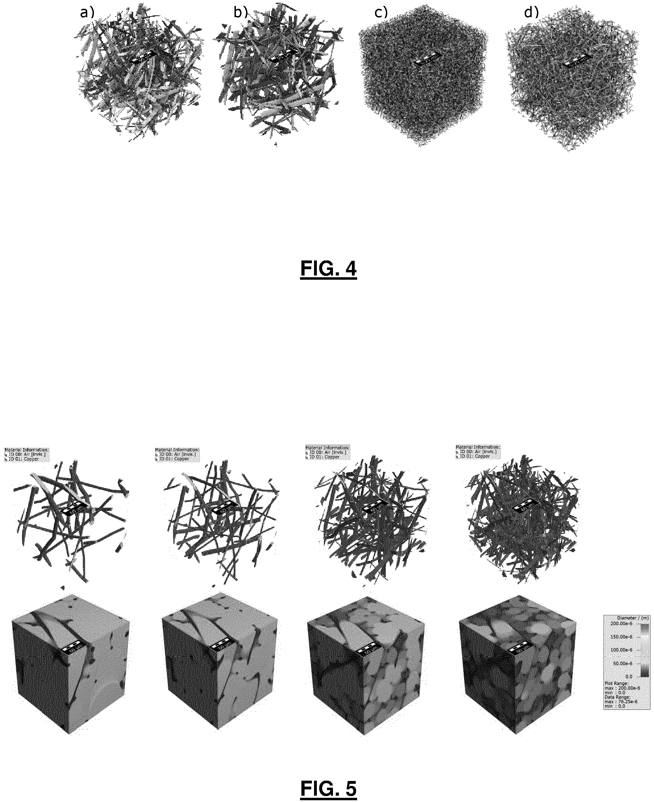

The effects of different fiber shapes on the porosity of a filter have been studied with simulations (see Fig. 5). The experimental results are discussed below.

For said simulations a fiber volume fraction of 2 vol% has been set as a constant value and only the ratio between the axes D2 and D1 has been varied (see Table 1 below).

**Table 1:** porosity of filters made out of fibers with different aspect ratios

|  | Round | Slightly elliptical | Elliptical | Highly elliptical |
|---|---|---|---|---|
| **Large elliptic axis (D1) [μm]** | 10 | 10 | 10 | 10 |
| **Small elliptic axis (D2) [μm]** | 10 | 5 | 2 | 1 |
| **Ratio (D2/D1) [μm]** | 1 | 0.5 | 0.2 | 0.1 |
| **Volume fraction [vol%]** | 2 | 2 | 2 | 2 |
| **Mean Pore size [μm]** | 113 | 83 | 53 | 38 |

One can clearly see that the mean pore size of filters made out of round fibers (column 1) is significantly bigger than the pore size of a filter made out of highly elliptical fibers (fourth column). Smaller mean pore sizes lead to a better filter performance since gases or liquids flowing through such a filter can be cleaned from smaller particles compared to filters with bigger mean pore sizes. Hence, it could be observed that the smaller the aspect ratio of the fibers 10 is, the smaller the mean pore sizes and the better the filter performance will get.

As a consequence of the smaller mean pore size observed for elliptical fibers 10, two networks (i. e. filters) with different fiber sizes and the same aspect ratios (highly elliptical) have been compared with two filters of different fiber sizes but with the same aspect ratios (round) (Fig. 4. and Table 2). For these comparisons, a standardized flow simulation (ASTM D737 - 04 Standardized Air permeability test) can be used to test the flow performance of these structures.

**Table 2:** comparison of elliptical fibers with round fibers

| | 5 μm MPI-MF metal fibers | 10 μm MPI-MF metal fibers | 4 μm Fiber Network | 8 μm Fiber Network |
|---|---|---|---|---|
| Diameter D1 [μm] | 5 | 10 | 4 | 8 |
| Aspect ratio | 0.1 | 0.1 | 1 | 1 |
| Volume fraction [v%] | 2 | 2 | 4 | 4 |
| Filter Thickness [mm] | 0,5 | 0,5 | 0,5 | 0,5 |
| Mean pore size [μm] | 20,1±10 | 37,5±15 | 35±15 | 69±37 |
| Flow Rate @ 125 Pa [l/s /m²] | 174 | 260 | 649 | 2188 |

Having closer look at Table 2, it becomes apparent that the performance of the metal fiber network does not depend on the fiber size or their diameter, but mostly on the porosity of the fiber network. Hereby, it could be shown that by using a volume fraction of 2 vol% instead of 4 vol% for the elliptical fiber network (filter), smaller porosities and highly decreased flow rates could be achieved. Comparing similar porosities (4 μm fiber network vs. 10 μm elliptical MPI-MF metal fiber network) the elliptical fibers are able to achieve smaller flow rates due to additional vortexes forming behind the fibers, according to Fig. 3. These vortexes prolong the flight path of molecules, particles and even the air flow in the metal fiber network.

In order to show the effect of such smaller aspect ratio fibers on heating particles, i. e. water droplets, in a fiber network, a theoretical calculation has been done to evaluate the power output of the filter. It has been assumed that a metal fiber network (i. e. a filter) has a certain temperature and air containing particles or droplets are blown through it. The heat of the network is consequently transmitted to the particles by either heat convection or heat radiation. The Stefan-Boltzmann-Equation for grey bodies has been used to calculate the heat emitted for different metal fiber networks at 190 °C and an emission coefficient of $\varepsilon$ = 0.1. The results are displayed in Table 3.

**Table 3:** heat emission of metal fiber networks at 190°C made of CuSn8

| | 5 μm MPI-MF metal fibers | 10 μm MPI-MF metal fibers | 4 μm Fiber Network | 8 μm Fiber Network |
|---|---|---|---|---|
| Diameter D1 [μm] | 5 | 10 | 4 | 8 |
| Aspect ratio | 0.1 | 0.1 | 1 | 1 |
| Volume fraction [v%] | 2 | 2 | 4 | 4 |
| Filter Thickness [mm] | 0,5 | 0,5 | 0,5 | 0,5 |
| Mean pore size [μm] | 20,1±10 | 37,5±15 | 35±15 | 69±37 |
| Emitted Power [J/s] | 50,36 | 20,11 | 15,4 | 5,13 |

It becomes apparent that structures with significantly larger inner surfaces are able to emit larger amounts of radiation. Especially fibers with an elliptical cross section are able to radiate a large amount of heat. Furthermore, due to the inherently low emission gradient of metals, the radiated heat is scattered and reflected on the inner surfaces of the fibers, leading to a large transmission efficiency.

In order to obtain fibers 10 with a given shape it is possible to use fibers 10 which have been produced by a melt spinning process. Corresponding apparatuses for melt spinning can be found, for example, in the not yet published international application PCT/EP2020/063026 and from published applications WO2016/020493 A1 and WO2017/042155 A1. With such apparatuses big batches of fibers having given size dimensions and a good quality can be fabricated rather quick and easily.

Said melt spinning processes are known for producing rather flat ribbons with a rectangular cross section. Hence, their aspect ratios (width to length) are quite small and thus such ribbons would lead to a good filter performance.

However, as it has already been mentioned above, the mechanical stability of round fibers can be higher. Hence, a treatment process for rounding said flat ribbons to a certain degree is needed.

According to the invention the treatment method comprises heating the fibers 10 in an oven (not shown) to a temperature between 70 and 95% of the melting temperature, such that the ratio increases, preferably up to 1.

By means of such a thermal treatment below the melting temperature of the fibers, flat fibers of any size can be rounded as can be seen from the experimental results below.

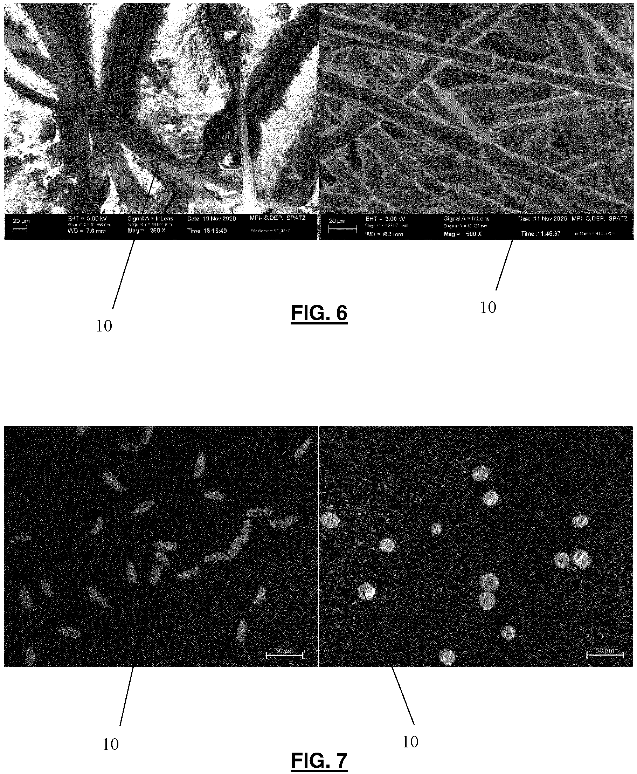

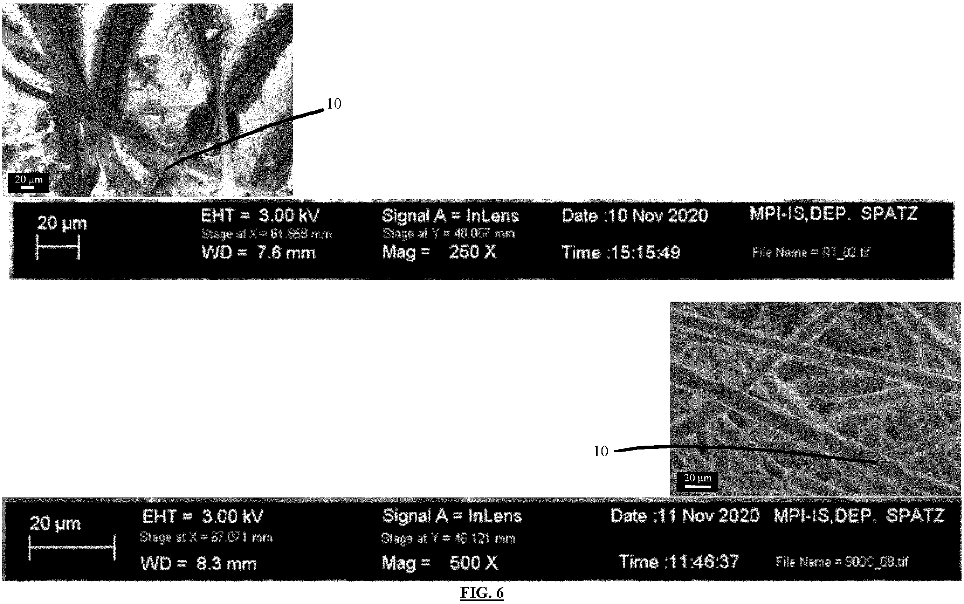

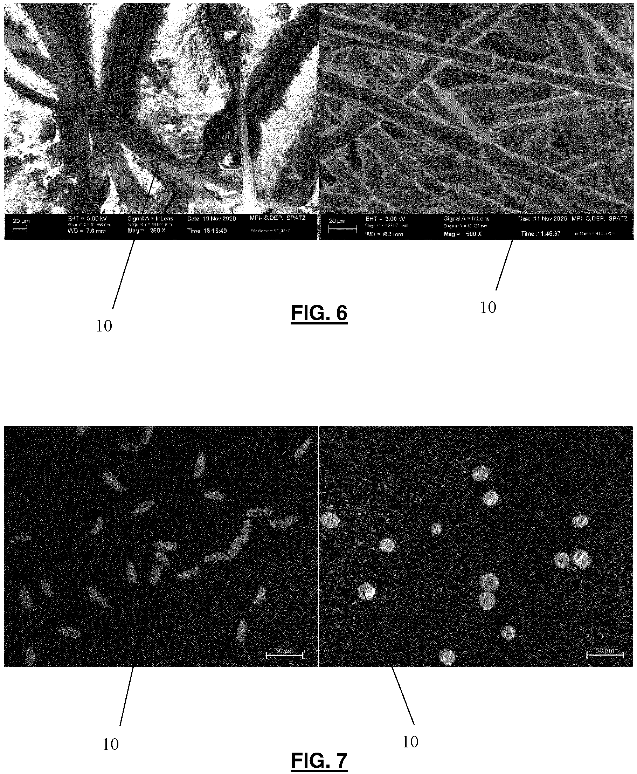

As an example, fibers 10 of a copper alloy (CuSi4; 4% by weight Si and 96% by weight Cu) were thermally treated and the rounding was investigated. Fig. 6 shows untreated fibers 10 (left) and CuSi4 fibers of the same fiber batch that have been aged under argon at 900 °C for 1 hour (right). It is easy to see that the previously very flat fibers get almost perfectly round, and thus their aspect ratio has changed from x: 1 (x> 1) to almost 1: 1. In-situ tests have shown that the rounding is almost complete after just a few minutes. Here, the more the aspect ratio differs from 1:1 or, in other words, the less round the fibers 10 are, the faster the rounding takes place and the slower the rounding takes place the rounder the fiber becomes (compare equation (1) above) because the surface free energy has already been greatly minimized and is closer to the optimum. Table 4 shows the investigated temperatures for fibers 10 of the copper alloy CuSi4 as well as whether a rounding has taken place or not. Some non-thermally treated and thermally treated fibers 10 were cast in epoxy resin, polished metallographically and then measured by means of optical microscopy. Fig. 7 shows the metallographic cross-section of thermally untreated fibers 10 (left) and thermally treated fibers 10 (right) made out of CuSi4 type of the same batch. It is easy to see that the flat fibers 10 are almost perfectly round after the thermal treatment.

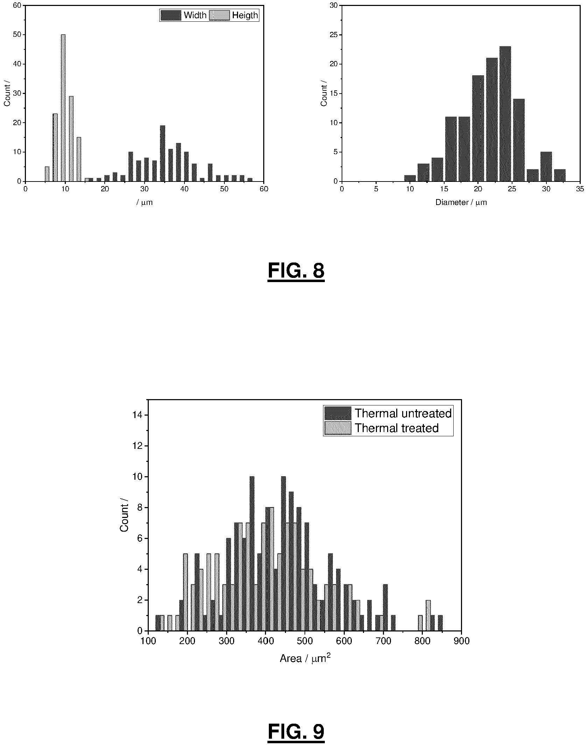

Fig. 8 shows the theoretical evaluation of the fiber dimensions in width and height for the flat fibers 10 and a diameter for the thermally treated rounded fibers 10. While the thermally untreated fibers 10 have an average aspect ratio of approximately 1:3.5, after the thermal treatment the aspect ratio is 1:1. Thus, said rounded fibers 10 are then in a thermodynamically more favorable state due to the minimized surface.

In Fig. 9, the area of the fiber cross-section of the thermally untreated and thermally treated fibers 10 was determined. As expected, this value does not change during the thermal treatment and the fibers still have the same statistical distribution (due to production) as the thermally untreated fibers.

**Table 4:** experimented temperatures for the copper alloy CuSi4 and its respective rounding

| Temperature | 800 °C | 850 °C | 900 °C | 950 °C |
| --- | --- | --- | --- | --- |
| Rounding | flat | round | round | round |

The physical basis of the rounding, i. e. diffusion, can be found in any material. Therefore, this process can be applied to a wide range of metallic fibers, regardless of their size and composition. A specific temperature must be used for each material, usually in the range of 70-95% of its melting temperature. The higher the temperature, the faster the process takes place. The choice of time is also essential, as larger fibers tend to be rounded at a lower temperature and for a longer time in order to avoid undesired breaks or deformations.

It may also be possible to choose the treatment time and temperature such that the rounding takes place only to a certain degree such that fibers 10 with different aspect ratios can be produced.

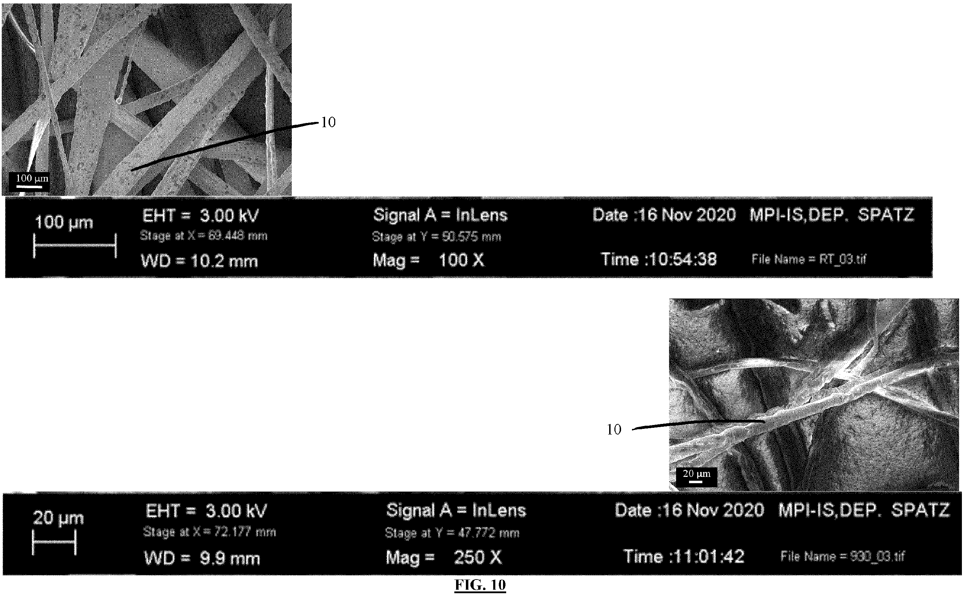

In order to show the independence of the dimensions, in addition to the very fine fibers of Fig. 6 (35 $\mu$m width, 8 $\mu$m height), quite coarse fibers 10 (150 $\mu$m width, 10 $\mu$m height) were thermally treated at 930 °C for 1 hour under application of argon (Fig. 10). It is easy to see that also here the fibers 10 are almost perfectly round after the thermal treatment.

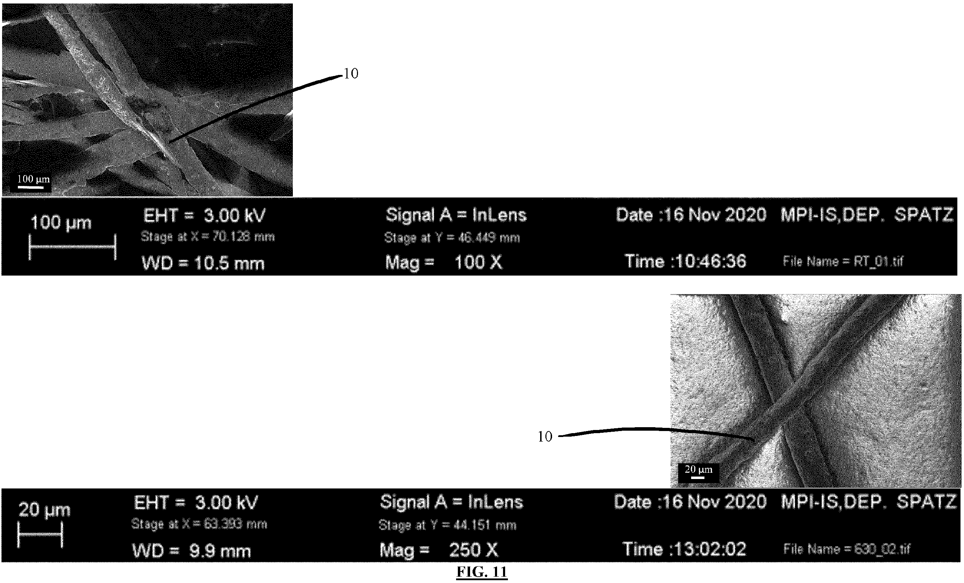

Fig. 11 shows fibers made out of the AlSi1 (1% by weight Si; 99% by weight Al). The fibers were thermally treated at 630 °C for 1 hour under the application of argon. Also here it can be seen that the fibers 10 are almost perfectly rounded after the thermal treatment. This shows that the process is not material dependent.

## Claims

1. A filter comprising a plurality of metal fibers (10) having a non-round cross section, in particular a rectangular, quadric, partial circular or an elliptical cross section with a large axis (D1) and a small axis (D2), wherein a ratio of the small axis (D2) to the large axis lies (D1) in the range of 1 to 0.05, preferably in the range of 0.7 to 0.1, in particular in the range of 0.5 to 0.1.

2. The filter according to claim 1,
   wherein the fibers (10) comprise a length of 0.1 mm or more.

3. The filter according to claim 1 or 2,
   wherein a length of the large axis (D1) is equal or smaller than 100$\mu$m, preferably 50 $\mu$m or less, in particular 20 $\mu$m or less, and the a length of the small axis (D2) is 20 $\mu$m or less, preferably 2 $\mu$m or less.

4. The filter according to one of the preceding claims,
   wherein the fibers (10) form an ordered or an unordered network.

5. The filter according to one of the preceding claims,
   wherein the filter comprises an average mean pore size selected in the range of 0.1 to 100 $\mu$m, preferably in the range of 0.5 to 50 $\mu$m, in particular in the range of 1 to 10 $\mu$m.

6. The filter according to one of the preceding claims,
   wherein the filter comprises a fiber volume fraction in the range of 0.5 and 50 vol%, preferably in the range of 1 to 25 vol%.

7. The filter according to one of the preceding claims,
   wherein the thickness of the filter is in a range of 0.1 to 100 mm, in particular 0.5 to 80 mm, preferably 1 to 20 mm.

8. The filter according to one of the preceding claims,
   wherein the fibers (10) are held by a frame.

9. The filter according to one of the preceding claims,
   wherein the fibers (10) are sintered to one another.

10. The filter according to one of the preceding claims,
    wherein the fibers (10) are composed of a metal alloy such as CuSn8, Cu-Si4, AlSi1, Ni, stainless steel, Cu, Al or vitrovac.

11. The filter according to one of the preceding claims,
    wherein at least some of the metal fibers (10) of the plurality of metal fibers (10) are sintered or processed by a thermal treatment.

12. The filter according to one of the preceding claims,
    wherein the fibers (10) are obtainable by a melt spinning process.

13. Treatment method for metal fibers comprising an elliptical or rectangular cross section, both having a large axis (D1) and a small axis (D2), wherein a ratio of a length of the small axis to a length of the large axis is smaller than 1, preferably smaller than 0.5,
    wherein the treatment method comprises the step of heating the fibers (10) in an oven to a temperature between 70 and 95% of the melting temperature, such that the ratio of the length of the small axis (D2) to the length of the large axis (D1) increases, preferably up to 1.

14. Method of claim 13,
    wherein the metal fibers (10) are at least a part of a filter according to one of the preceding claims.

15. The method of claim 13 or 14,
    wherein inside the oven a protective atmosphere, in particular comprising Argon or Nitrogen is applied to the fibers (10).

10

D2

D1

C

**FIG. 1**

10

10

10

10

1

0.5

0.2

0.1

**FIG. 2**

10

10

**FIG. 3**

**FIG. 4**

**FIG. 5**

**FIG. 5**

FIG. 4

FIG. 5

**FIG. 6**

10

10

10

10

**FIG. 7**

**FIG. 6**

FIG. 6

FIG. 7

**FIG. 8**

**FIG. 9**

EP 4 000 710 A1

**FIG. 10**

FIG. 11

Europäisches
Patentamt

European
Patent Office

Office européen
des brevets

# EUROPEAN SEARCH REPORT

Application Number

EP 20 20 8880

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 1 317 950 A1 (BEKAERT SA NV [BE]) 11 June 2003 (2003-06-11) | 1-12 | INV. B01D39/06 B01D39/20 |
| A | * paragraphs [0001], [0016], [0019], [0021], [0033] - [0037], [0046]; figures 1,2 * | 13-15 | |
| X | WO 2015/144408 A1 (BEKAERT SA NV [BE]) 1 October 2015 (2015-10-01) | 1-12 | |
| A | * paragraphs [0001], [0009], [0019], [0020], [0022], [0024], [0026], [0030], [0041], [0042]; figures 2-7 * | 13-15 | |
| X | WO 2004/104386 A2 (BEKAERT SA NV [BE]; MEI FENG [BE]; LAMBERT EDDY [BE]) 2 December 2004 (2004-12-02) | 1-12 | |
| A | * page 1, lines 5-28; figure 1; table 1 * * page 3, lines 14-26 * * page 4, lines 20-29 * * page 8, lines 11-30 * | 13-15 | |
| X | US 2011/318600 A1 (MATSUNAGA TETSUHIRO [JP] ET AL) 29 December 2011 (2011-12-29) | 1-12 | TECHNICAL FIELDS SEARCHED (IPC) |
| A | * paragraphs [0002], [0012], [0031], [0033] - [0036], [0049], [0054]; figures 1,2,8; example A2 * | 13-15 | B01D |
| X | WO 2005/025719 A1 (BEKAERT SA NV [BE]; VERSCHAEVE FRANK [BE]; VERSIECK JOHAN [BE]) 24 March 2005 (2005-03-24) | 1-12 | |
| A | * page 1, lines 20-32 * * page 2, line 28 - page 3, line 8 * * page 4, lines 11-18 * * page 5, line 14 - page 6, line 21 * | 13-15 | |

-/--

The present search report has been drawn up for all claims

| Place of search | Date of completion of the search | Examiner |
|---|---|---|
| The Hague | 14 July 2021 | Howe, Patrick |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 20 20 8880

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 3 572 169 A1 (MITSUBISHI MATERIALS CORP [JP]) 27 November 2019 (2019-11-27) * paragraphs [0015], [0018] - [0020], [0026], [0048], [0054], [0055], [0061] - [0064], [0068], [0083], [0102], [0103]; tables 1,2 * ----- | 1-15 | |
| A | WO 2016/075005 A1 (BEKAERT SA NV [BE]) 19 May 2016 (2016-05-19) * paragraphs [0001], [0022], [0026], [0030], [0035], [0039] - [0045] * ----- | 1-15 | |
| A | EP 3 598 526 A1 (MAX PLANCK GESELLSCHAFT [DE]) 22 January 2020 (2020-01-22) * paragraphs [0001], [0010], [0021] - [0024], [0035] - [0039] * ----- | 1-15 | |
| A | JP S55 110702 A (NIPPON SEISEN CO LTD) 26 August 1980 (1980-08-26) * the whole document * ----- | 1-15 | TECHNICAL FIELDS SEARCHED (IPC) |

The present search report has been drawn up for all claims

| Place of search | Date of completion of the search | Examiner |
|---|---|---|
| The Hague | 14 July 2021 | Howe, Patrick |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

<table>
<tr><td>Europäisches Patentamt<br>European Patent Office<br>Office européen des brevets</td><td align="right">Application Number<br><br>EP 20 20 8880</td></tr>
</table>

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☒ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 20 20 8880

The Search Division considers that the present European patent application does not comply with the
requirements of unity of invention and relates to several inventions or groups of inventions, namely:

    1. claims: 1-12

        Subject-matter of claim 1
                    ---

    2. claims: 13-15

        Subject-matter of claim 13
                    ---

## ANNEX TO THE EUROPEAN SEARCH REPORT
## ON EUROPEAN PATENT APPLICATION NO.

EP 20 20 8880

This annex lists the patent family members relating to the patent documents cited in the above-mentioned European search report.
The members are as contained in the European Patent Office EDP file on
The European Patent Office is in no way liable for these particulars which are merely given for the purpose of information.

14-07-2021

| Patent document cited in search report | | Publication date | Patent family member(s) | | Publication date |
|---|---|---|---|---|---|
| EP 1317950 | A1 | 11-06-2003 | AT | 303195 T | 15-09-2005 |
| | | | AU | 2002364308 A1 | 17-06-2003 |
| | | | CA | 2466575 A1 | 12-06-2003 |
| | | | CN | 1599635 A | 23-03-2005 |
| | | | DE | 60205938 T2 | 08-06-2006 |
| | | | DK | 1450929 T3 | 21-11-2005 |
| | | | EP | 1317950 A1 | 11-06-2003 |
| | | | EP | 1450929 A1 | 01-09-2004 |
| | | | ES | 2247417 T3 | 01-03-2006 |
| | | | JP | 2005512765 A | 12-05-2005 |
| | | | KR | 20050058274 A | 16-06-2005 |
| | | | US | 2005223688 A1 | 13-10-2005 |
| | | | WO | 03047720 A1 | 12-06-2003 |
| WO 2015144408 | A1 | 01-10-2015 | CN | 106068153 A | 02-11-2016 |
| | | | EP | 3122438 A1 | 01-02-2017 |
| | | | ES | 2755365 T3 | 22-04-2020 |
| | | | HU | E046204 T2 | 28-02-2020 |
| | | | JP | 6473168 B2 | 20-02-2019 |
| | | | JP | 2017512636 A | 25-05-2017 |
| | | | US | 2017128865 A1 | 11-05-2017 |
| | | | WO | 2015144408 A1 | 01-10-2015 |
| WO 2004104386 | A2 | 02-12-2004 | AU | 2003304517 A1 | 11-05-2005 |
| | | | CN | 1795321 A | 28-06-2006 |
| | | | EP | 1627135 A2 | 22-02-2006 |
| | | | JP | 4724122 B2 | 13-07-2011 |
| | | | JP | 2007501705 A | 01-02-2007 |
| | | | KR | 20060004986 A | 16-01-2006 |
| | | | US | 2006277881 A1 | 14-12-2006 |
| | | | WO | 2004104386 A2 | 02-12-2004 |
| | | | WO | 2005040572 A1 | 06-05-2005 |
| US 2011318600 | A1 | 29-12-2011 | CN | 102762777 A | 31-10-2012 |
| | | | CN | 104868128 A | 26-08-2015 |
| | | | EP | 2508652 A1 | 10-10-2012 |
| | | | JP | 4762368 B2 | 31-08-2011 |
| | | | JP | WO2011067957 A1 | 18-04-2013 |
| | | | KR | 20120082949 A | 24-07-2012 |
| | | | MY | 161424 A | 14-04-2017 |
| | | | TW | 201120251 A | 16-06-2011 |
| | | | US | 2011318600 A1 | 29-12-2011 |
| | | | WO | 2011067957 A1 | 09-06-2011 |
| WO 2005025719 | A1 | 24-03-2005 | AT | 466633 T | 15-05-2010 |
| | | | EP | 1663445 A1 | 07-06-2006 |

EPO FORM P0459

For more details about this annex : see Official Journal of the European Patent Office, No. 12/82

page 1 of 2

EP 4 000 710 A1

**ANNEX TO THE EUROPEAN SEARCH REPORT
ON EUROPEAN PATENT APPLICATION NO.**                    EP 20 20 8880

14-07-2021

| Patent document cited in search report | | Publication date | Patent family member(s) | | Publication date |
|---|---|---|---|---|---|
| | | | ES | 2343008 T3 | 21-07-2010 |
| | | | PL | 1663445 T3 | 30-09-2010 |
| | | | US | 2007012612 A1 | 18-01-2007 |
| | | | WO | 2005025719 A1 | 24-03-2005 |
| EP 3572169 | A1 | 27-11-2019 | CN | 109803778 A | 24-05-2019 |
| | | | EP | 3572169 A1 | 27-11-2019 |
| | | | JP | 6724801 B2 | 15-07-2020 |
| | | | JP | 2018115370 A | 26-07-2018 |
| | | | KR | 20190108103 A | 23-09-2019 |
| | | | TW | 201842200 A | 01-12-2018 |
| | | | US | 2019381568 A1 | 19-12-2019 |
| | | | WO | 2018135575 A1 | 26-07-2018 |
| WO 2016075005 | A1 | 19-05-2016 | CN | 107073580 A | 18-08-2017 |
| | | | EP | 3218081 A1 | 20-09-2017 |
| | | | JP | 6706258 B2 | 03-06-2020 |
| | | | JP | 2018500458 A | 11-01-2018 |
| | | | KR | 20170085497 A | 24-07-2017 |
| | | | US | 2017239602 A1 | 24-08-2017 |
| | | | WO | 2016075005 A1 | 19-05-2016 |
| EP 3598526 | A1 | 22-01-2020 | CN | 112740444 A | 30-04-2021 |
| | | | EP | 3598526 A1 | 22-01-2020 |
| | | | EP | 3821482 A1 | 19-05-2021 |
| | | | KR | 20210033006 A | 25-03-2021 |
| | | | WO | 2020016240 A1 | 23-01-2020 |
| JP S55110702 | A | 26-08-1980 | JP | S6124442 B2 | 11-06-1986 |
| | | | JP | S55110702 A | 26-08-1980 |

EPO FORM P0459

For more details about this annex : see Official Journal of the European Patent Office, No. 12/82

**EP 4 000 710 A1**

**Patent documents cited in the description**

- EP 2020063026 W
- WO 2016020493 A1
- WO 2017042155 A1